(19) Europäisches Patentamt
European Patent Office
Office européen des brevets

(11) **EP 0 810 439 A2**

(12) **EUROPÄISCHE PATENTANMELDUNG**

(43) Veröffentlichungstag:
03.12.1997 Patentblatt 1997/49

(51) Int Cl.6: **G01P 15/00**, G01C 9/00

(21) Anmeldenummer: 97402002.6

(22) Anmeldetag: 25.04.1997

(84) Benannte Vertragsstaaten:
AT BE CH DE ES FR GB IT LI NL SE

(30) Priorität: 30.04.1996 DE 19617326

(71) Anmelder: ALCATEL ALSTHOM COMPAGNIE GENERALE D'ELECTRICITE
75008 Paris (FR)

(72) Erfinder:
• Sauer, Peter, Dr.
71254 Ditzingen (DE)
• Noe, Bernhard
70736 Fellbach (DE)

(74) Vertreter: Knecht, Ulrich Karl, Dipl.-Ing. et al
Alcatel Alsthom
Intellectual Property Department,
Postfach 30 09 29
70449 Stuttgart (DE)

(54) **Verfahren und Einrichtung zur Erfassung der Beschleunigung eines mehrgliedrigen Schienenfahrzeuges**

(57) Es wird ein Verfahren und eine Einrichtung zu dessen Durchführung angegeben, das eine Erfassung der Beschleunigung eines mehrgliedrigen Schienenfahrzeuges unabhängig von der Neigung der zu befahrenden Strecke ohne Verwendung einer Inertialplattform erlaubt. An zwei unterschiedlichen Gliedern (FK, FS) des Fahrzeuges werden einfache Beschleunigungssensoren ($S_1$, $S_2$) angeordnet, deren Meßergebnisse einem Bordrechner (FR) zugeführt werden. Nach Initialisierung der Anordnung auf einem Streckenabschnitt bekannter Neigung, berechnet der Bordrechner laufend die am Ort des in Fahrtrichtung vorn befindlichen Sensors ($S_1$) vorhandene Streckenneigung unter Verwendung des von ihm jeweils zuvor, für den Ort, an dem sich inzwischen der Sensor $S_2$ befindet, berechneten und abgespeicherten Streckenneigungswertes und speichert die neu berechneten Streckenneigungswerte in dichter Folge wegbezogen ab.

Fig. 2

Printed by Jouve, 75001 PARIS (FR)

**Beschreibung**

Die Erfindung betrifft ein Verfahren und eine Einrichtung zur Erfassung der Beschleunigung eines aus mindestens zwei gelenkig miteinander verbundenen Gliedern bestehenden Schienenfahrzeuges, unabhängig von der Neigung der zu befahrenden Strecke.

Bei automatisch gesteuerten Schienenfahrzeugen muß die in Fahrtrichtung wirksame Beschleunigung ständig erfaßt werden, um die vom Fahrzeug gefahrene, der Berechnung der Bremskurven zugrundeliegende Geschwindigkeit gegen Verfälschungen, die z.B. durch Fehlfunktionen der Geschwindigkeitsmeßsysteme verursacht werden können, zu sichern.

Beispielsweise kann eine durch Radimpulsgeber ausgeführte Geschwindigkeitsmessung zeitweilig durch Schlupf verfälscht sein. Dies kann dadurch erkannt werden, daß ein auf dem Fahrzeug vorhandener Beschleunigungsaufnehmer keine der Geschwindigkeitsänderung entsprechende Beschleunigung feststellt. Es kann dann der vor der Änderung gültige Geschwindigkeitswert als weiterhin gültig angesehen und der verfälschte Wert verworfen werden.

Beschleunigungsmesser erfassen jedoch nicht nur Geschwindigkeitsänderungen eines Fahrzeuges, sondern auch die Erdbeschleunigung, die sich auf geneigten Strecken als sogenannte Hangbeschleunigung der Fahrzeugbeschleunigung überlagert und deren Erfassung stört.

Um die Hangbeschleunigung auszuschalten, ist es z.B. aus der DE 28 13 078 bekannt, eine sogenannte Inertialplattform zu verwenden, die eine Anfangslage eines Fahrzeuges im Raum festhält und damit ermöglicht, die Streckenneigung zu erfassen, aus der dann der auf die Erdbeschleunigung zurückzuführende Anteil der gemessenen Beschleunigung berechnet werden kann.

Inertialplattformen sind sehr teuer und außerdem empfindlich gegen Stöße und Vibrationen, wie sie auf Schienenfahrzeugen auftreten.

Der Erfindung liegt deshalb die Aufgabe zugrunde, ein Verfahren und eine zu dessen Durchführung geeignete Einrichtung anzugeben, die die Erfassung der Fahrzeugbeschleunigung ohne Verwendung einer Inertialplattform ermöglichen.

Ein Verfahren, das die Aufgabe der Erfindung löst, ist im Patentanspruch 1, eine zur Durchführung des Verfahrens geeignete Einrichtung im Patentanspruch 2 beschrieben.

Die Erfindung ermöglicht die Erfassung der Fahrzeugbeschleunigung auf Fahrstrecken mit beliebiger Streckenneigung mit zwei einfachen Beschleunigungssensoren und einem meist ohnehin vorhandenen Bordrechner.

Eine Weiterbildung des Verfahrens nach der Erfindung, die im Patentanspruch 3 beschrieben ist, ermöglicht die Eichung und die Korrektur der zur Durchführung des Verfahrens nach der Erfindung verwendeten Einrichtung, auch während des Betriebes.

Anhand von zwei Figuren soll im folgenden ein Ausführungsbeispiel des Verfahrens nach der Erfindung eingehend beschrieben werden.

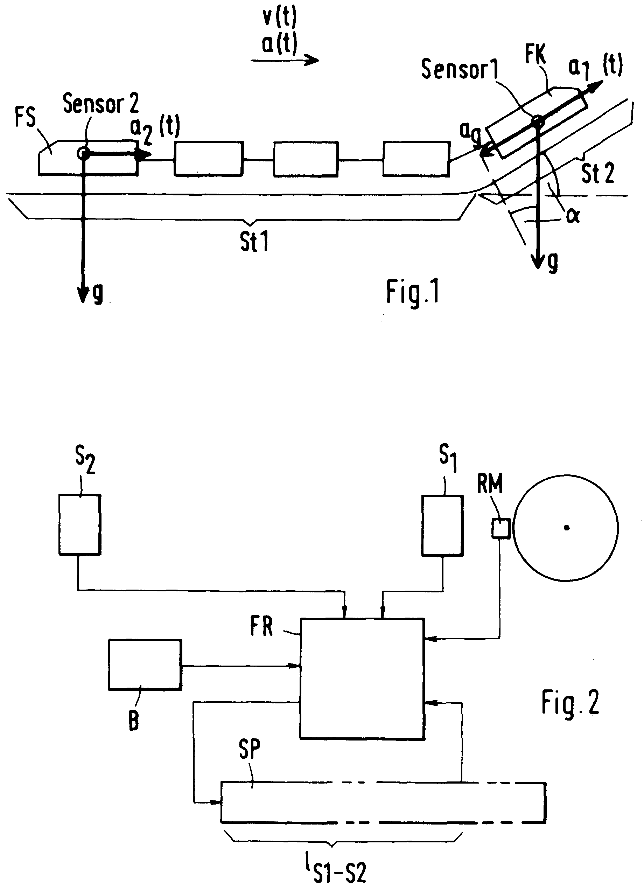

In Fig. 1 ist schematisch eine Eisenbahnstrecke wiedergegeben, die aus zwei unterschiedlich geneigten Teilstrecken $St_1$ und $St_2$ besteht. In der Figur besitzt die waagrechte Teilstrecke $St_1$ z.B. die Neigung 0°, die Teilstrecke $St_2$ steigt mit einem Winkel a (z.B. 3°) gegenüber der Teilstrecke $St_1$ an.

Auf der Strecke befindet sich ein mehrgliedriger Zug mit einem Kopffahrzeug FK und einem Schlußfahrzeug FS.

Der Zug bewegt sich mit einer Geschwindigkeit v(t) und einer Beschleunigung a(t) in der Figur von links nach rechts. Neben Weg- und Geschwindigkeitsmeßeinrichtungen und einem Fahrzeugrechnersystem trägt das Kopffahrzeug einen ersten Beschleunigungssensor $S_1$, der alle in Fahrtrichtung oder entgegen der Fahrtrichtung auftretenden Beschleunigungen mißt und dem Fahrzeugrechner zur Verfügung stellt.

Auf dem Schlußfahrzeug befindet sich ein zweiter, gleichartiger Beschleunigungssensor $S_2$, der seine Meßwerte ebenfalls dem Fahrzeugrechner zuführt. Die von den Beschleunigungssensoren ermittelten Meßwerte ($a_1(t)$, $a_2(t)$) setzen sich, wie in der Figur am Sensor des Kopffahrzeuges dargestellt, aus einem der Geschwindigkeitsänderung des Zuges entsprechenden Anteil a(t) und einem auf die Erdbeschleunigung g zurückzuführenden Anteil $a_g$ zusammen. In der Figur tritt der Erdbeschleunigungsanteil $a_g$ nur beim Sensor $S_1$ des Kopffahrzeuges FK auf, da nur dieses sich auf der geneigten Teilstrecke befindet. Das Signal $a_2(t)$ des Sensors $S_2$ enthält, da sich der Sensor $S_2$ in waagrechter Lage befindet, keinen Erdbeschleunigungsanteil und entspricht damit der Beschleunigung a(t) des Zuges.

In Fig. 1 ist die am Sensor $S_1$ gemessene Beschleunigung $a_1(t) = a(t) + a_g$ wobei $a_g = g \cdot \sin \alpha$ und $\alpha$ die Neigung der Teilstrecke $St_2$ ist. Die am Sensor $S_2$ gemessene Beschleunigung ist $a_2(t) = a(t)$, da der Erdbeschleunigungsanteil dort wegen der nicht vorhandenen Streckenneigung verschwindet. In diesem Fall läßt sich die Streckenneigung $\alpha$ als

$$\alpha = \arcsin \left( \frac{a_1(t) - a_2(t)}{g} \right)$$

bestimmen.

Befindet sich das Schlußfahrzeug ebenfalls auf z. B. mit dem Neigungswinkel $\beta$ geneigter Strecke, so tritt an die Stelle von $a_2(t)$ die Größe $a(t) + g \cdot \sin \beta$ und eine Berechnung des Neigungsunterschiedes der Strecke an den Orten der Beschleunigungssensoren ist nur möglich, wenn die Streckenneigung an einem der Sensororte, zum Beispiel am Ort des Sensors $S_2$, bekannt ist. Nur dann läßt sich aus dem Meßwert des Sensors $S_2$ die Beschleunigung des Zuges und mit dieser aus dem Signal des Sensors $S_1$ die am Ort dieses Sensors vorhandene Streckenneigung ermitteln.

Da die Beschleunigung aufgrund einer Geschwindigkeitsänderung des Zuges, a(t), an beiden Sensororten gleich ist, gilt dann

$$a_2(t) - g \bullet \sin \beta = a_1(t) - g \bullet \sin \alpha.$$

Liegen die Meßwerte $a_1(t)$ und $a_2(t)$ der Sensoren $S_1$ und $S_2$ vor und ist die Streckenneigung $\beta$ am Ort des Sensors $S_2$ bekannt, dann läßt sich die Streckenneigung a am Ort des Sensors $S_1$ als

$$\alpha = \arcsin \left( \frac{a_1(t) - a_2(t) + g \bullet \sin \beta}{g} \right)$$

bestimmen.

Die Streckenneigung am Ort des Sensors $S_2$, deren Bekanntsein Voraussetzung für eine Berechnung der Streckenneigung am Ort des Sensors $S_1$ ist, entspricht nach Initialisierung der beiden Sensoren auf einem Streckenstück bekannter, konstanter Neigung immer dem Wert, der als Streckenneigung am Ort des Sensors $S_1$ ermittelt wurde, als sich der Sensor $S_1$ noch am Ort des Sensors $S_2$ befand. Ist dieser Wert noch verfügbar, so läßt sich gemäß vorstehender Beziehung ein Streckenneigungswert für den neuen Ort des Sensors $S_1$ berechnen. Um jederzeit Neigungswerte für den Ort des Sensors $S_2$ zur Verfügung zu haben, speichert der Fahrzeugrechner die am Ort des Sensors 1 ermittelten Streckenneigungswerte in dichter Folge nacheinander ab. Geschieht dies wegbezogen, z.B. alle 10m, so läßt sich bei bekanntem Abstand zwischen den Sensoren leicht dem Speicher der Wert entnehmen, der die Streckenneigung am Ort des Sensors S2 wiedergibt. Die Ermittlung der Streckenneigung geschieht dann unabhängig von der gefahrenen Geschwindigkeit. Ist eine höhere Genauigkeit als sie die 10-m Teilung ermöglicht, erwünscht, so kann in kürzeren Wegintervallen abgespeichert werden oder es können dem Speicher beide dem Ort des Sensors $S_2$ benachbart gelegenen "10m-Werte" entnommen und zwischen diesen "interpoliert" werden.

Fig. 2 zeigt schematisch die zur Ermittlung der Fahrzeugbeschleunigung erforderliche Einrichtung. Mit einem Fahrzeugrechner FR sind Ausgänge zweier Beschleunigungsaufnehmer $S_1$, $S_2$ und der Ausgang einer Radumdrehungs-Meßeinrichtung RM zur laufenden Wegmessung verbunden. Dem Rechner FR ist ein Speicher SP zugeordnet, der wegbezogene Streckenneigungswerte in der Art eines Schieberegisters enthält.

Bei wegäquidistanter Abspeicherung von Neigungswerten ist der Rechner in der Lage, einen Streckenneigungswert, der eine dem Abstand der beiden Sensoren voneinander entsprechende Wegstrecke zurückliegt, aus dem Speicher abzurufen und zur Berechnung des aktuellen Streckenneigungswertes am Ort

des Sensors $S_1$ zu verwenden. Eine Bedien- und Anzeigeeinrichtung dient der Kommunikation mit dem Fahrzeugrechner und der Eingabe von Anfangswerten von Streckenneigung und Abstand der Sensoren voneinander bei Initialisierung der Fahrzeugeinrichtung und zur Korrektur an gegebenen Streckenorten.

**Patentansprüche**

1. Verfahren zur Erfassung der Beschleunigung (a(t)) eines aus mindestens zwei gelenkig miteinander verbundenen Gliedern bestehenden, mit einer Wegmeßeinrichtung ausgestatteten Schienenfahrzeuges, unabhängig von der Neigung der zu befahrenden Strecke, mit folgenden Merkmalen:

   - Zwei verschiedene Glieder des Schienenfahrzeuges (FK, FS) werden mit Beschleunigungssensoren ($S_1$, $S_2$) ausgerüstet und deren Ausgänge mit einem Fahrzeug-Bordrechner (FR) verbunden.

   - Zur Initialisierung wird das Fahrzeug auf eine Strecke mit bekanntem Neigungsprofil gebracht und das Neigungsprofil wegbezogen, z. B. als Folge äquidistanter Streckenpunkte und zugehöriger Streckenneigungswerte im Fahrzeug-Bordrechner abgespeichert, wobei die aktuellen Positionen der Sensoren entweder dem Fahrzeugrechner per Eingabe mitgeteilt oder, nach Vorbeifahrt von auf Höhe der Sensoren befindlichen, fahrzeugseitigen Empfangsrichtungen an einer streckenseitigen Sendeeinrichtung, auf dem Fahrzeug ermittelt werden.

   - Nach Fahrtbeginn wird die am Ort des in Fahrtrichtung vorn befindlichen Sensors ($S_1$) vorhandene Streckenneigung aus den Beschleunigungs-Meßwerten ($a_1(t)$, $a_2(t)$) beider Sensoren und der für den Ort des in Fahrtrichtung zurückliegenden Sensors ($S_2$) gespeicherten Streckenneigung laufend berechnet, bei der Bestimmung der Fahrzeugbeschleunigung berücksichtigt und zur Fortspeicherung des Neigungsprofils in vorgegebenen Wegabständen, zusammen mit dem jeweiligen Streckenort, abgespeichert.

2. Einrichtung zur Durchführung des Verfahrens nach Patentanspruch 1, gekennzeichnet durch folgende Merkmale:

   - Beschleunigungssensoren ($S_1$, $S_2$) an mindestens zwei unterschiedlichen, gelenkig miteinander verbundenen, insbesondere am Fahrzeugkopf und am Fahrzeugende befindlichen Gliedern (FK, FS) des Fahrzeuges,

- einen Bordrechner mit einer Eingabe (B) und mit Speichern (SP) zur fahrwegbezogenen Speicherung einer Folge von Streckenneigungswerten und zur fortlaufenden Berechnung der Streckenneigung am Ort des in Fahrtrichtung vorn befindlichen Beschleunigungssensors ($S_1$), zur Berechnung der Fahrzeugbeschleunigung (a(t)) und zur fahrwegbezogenen Fortspeicherung der berechneten Streckenneigung (a).

3. Verfahren nach Patentanspruch 1, dadurch gekennzeichnet, daß eine Korrektur der abgespeicherten Streckenneigungswerte erfolgt, wenn das Fahrzeug einen besonders gekennzeichneten Streckenabschnitt passiert, entlang dem die Streckenneigung bekannt ist.

Fig.1

Fig. 2